# FASCICULE DE BREVET EUROPEEN

(11) **EP 3 678 839 B1**
(45) Date de publication et mention de la délivrance du brevet: **04.08.2021**
(21) Numéro de dépôt: 18755212.0
(22) Date de dépôt: 22.08.2018
(51) Int. Cl.: B29C 49/42, B65G 47/84, B65G 47/86, B65G 17/00, B29C 49/06

(54) **INSTALLATION DE TRANSPORT DE PREFORMES EQUIPEE D'UN DISPOSITIF D'INDEXAGE ANGULAIRE DE TOURNETTES**
MIT EINER VORRICHTUNG ZUR WINKELIGEN INDEXIERUNG VON SPINDELN AUSGESTATTETE ANLAGE ZUM TRANSPORTIEREN VON VORFORMLINGEN
FACILITY FOR TRANSPORTING PREFORMS EQUIPPED WITH A DEVICE FOR ANGULARLY INDEXING SPINDLES

(30) Priorité: 08.09.2017 FR 1758319
(43) Date de publication de la demande: 15.07.2020
(73) Titulaire: Sidel Participations, 76930 Octeville-sur-Mer (FR)
(72) Inventeur: FEVRE, Sébastien, 76930 Octeville Sur Mer (FR); MORIN, Stéphane, 76930 Octeville Sur Mer (FR); LEMBLE, Thierry, 76930 Octeville Sur Mer (FR)
(74) Mandataire: Sidel Group
(86) Numéro de dépôt international: PCT/EP2018/072681
(87) Numéro de publication internationale: WO 2019/048238

(56) Documents cités:
- WO-A1-95/33616
- US-B1- 7 284 778
- US-B2- 7 771 188
- US-B2- 9 393 732

## Description

L'invention a trait au transport des préformes de récipients, notamment en matière plastique tel que polytéréphtalate d'éthylène (PET). Une préforme comprend classiquement un corps cylindrique qui se termine par un fond hémisphérique, un col ouvert qui présente sa forme finale, et (en général) une collerette séparant le col du corps.

Dans une installation de fabrication de récipients, les préformes brutes d'injection sont ordinairement stockées en vrac dans un conteneur. Les préformes sont d'abord prélevées du conteneur, orientées et ordonnées en ligne pour être introduites dans une unité de conditionnement thermique (habituellement appelée « four ») équipée d'émetteurs infrarouge. Dans le four, les préformes sont portées à une température supérieure à leur température de transition vitreuse (laquelle est d'environ 80°C pour le PET).

Les préformes ainsi chauffées sont ensuite transférées vers une unité de formage équipée d'une pluralité de moules dans lesquels les préformes sont formées à l'empreinte des récipients par soufflage ou étirage soufflage.

Dans le four, les préformes sont convoyées au défilé au moyen d'une chaîne de transport comprenant une pluralité de maillons portant chacun un support pour une préforme. Ce support est monté en pivot glissant par rapport au maillon et est couramment appelé « tournette ».

La tournette comprend généralement un mandrin solidaire d'un pignon engrenant une crémaillère, et un nez de tournette monté sur le mandrin. Le nez de tournette est destiné à venir s'emmancher dans le col d'une préforme.

De la sorte, la préforme emboîtée sur la tête du mandrin est entraînée à la fois en translation et en rotation dans le four, de manière à être pleinement exposée au rayonnement des émetteurs infrarouge.

Une même installation doit pouvoir convenir à la fabrication de récipients de différents modèles, et notamment de différentes capacités. Un modèle donné de préforme peut convenir à plusieurs modèles de récipients, mais pas à tous. Aussi le four doit-il pouvoir assurer la chauffe de différents modèles de préformes.

Les préformes ne se distinguent pas seulement par les formes (et tailles) de leur corps : il arrive qu'elles aient des cols de diamètres différents.

On peut aisément comprendre qu'il est alors nécessaire de remplacer chaque nez de tournette par un autre, d'un diamètre adapté au nouveau modèle de préforme à chauffer.

Le nez de tournette est ordinairement monté sur le mandrin au moyen d'une baïonnette, qui se présente sous forme d'une rainure pratiquée dans le mandrin, dans laquelle s'engage une goupille solidaire du nez de tournette. "Un tel nez de tournette est décrit dans les documents US9393732 et WO95/33616". Le retrait du nez de tournette nécessite par conséquent l'immobilisation en rotation du mandrin, et la rotation (d'un angle généralement compris entre 10° et 20°) du nez de tournette pour désengager la goupille de la baïonnette. Inversement, le montage d'un nouveau nez de tournette nécessite également l'immobilisation en rotation du mandrin, l'orientation du nez de tournette pour placer la goupille au droit de la baïonnette, puis l'introduction de la goupille dans la baïonnette et la rotation de la goupille pour la verrouiller dans la baïonnette.

Ces opérations sont le plus couramment réalisées à la main, ce qui explique que le remplacement de tous les nez de tournettes prenne plusieurs heures, pendant lesquelles toute la ligne de production est à l'arrêt. Comme environ 40 000 récipients sortent chaque heure d'une ligne de production moderne, on comprend qu'il soit crucial de minimiser dans la mesure du possible le temps d'intervention nécessaire au remplacement des nez de tournettes.

Il a été proposé de robotiser cette intervention : la demande de brevet européen EP 2 976 207 (SACMI) décrit ainsi un robot multiaxe pourvu d'une pince qui vient saisir le nez de tournette pour désengager la goupille de la baïonnette et dénuder le mandrin. Le nez de tournette ainsi retiré est déposé dans un magasin, d'où le robot extrait un nouveau nez de tournette qu'il monte sur le mandrin dénudé.

Cependant cette solution demeure perfectible. D'une part, il n'est pas indiqué comment le mandrin est immobilisé en rotation pour permettre le démontage (ou le montage du nez de tournette), ce qui met en doute le caractère fonctionnel de la solution proposée. En outre, comme la position angulaire du mandrin peut varier d'une tournette à l'autre, le robot est contraint de tâtonner pour positionner la goupille au droit de la baïonnette, ce qui perd du temps.

Un objectif est par conséquent de proposer une solution fonctionnelle permettant de procéder à un remplacement robotisé des nez de tournettes dans une installation de transport de préformes.

Un objectif corollaire est de minimiser le temps nécessaire à ce remplacement, de sorte à réduire la durée d'arrêt de la ligne de production.

A cet effet, il est proposé, en premier lieu, une installation de transport de préformes de récipients, chaque préforme ayant un corps cylindrique et un col ouvert, cette installation comprenant :
- Une crémaillère ;
- Une chaîne de transport déplacée le long d'un parcours, et comprenant une pluralité de maillons articulés les uns par rapport aux autres, chaque maillon portant au moins un fourreau solidaire du maillon et une tournette pourvue :
   ∘ d'un mandrin monté en pivot glissant par rapport au fourreau,
   ∘ d'un pignon solidaire en rotation du mandrin et engrenant la crémaillère sur une section active du parcours,
   ∘ d'un nez de tournette fixé sur le mandrin de manière démontable par l'intermédiaire d'une baïonnette ;
- au droit d'une section locale inactive du parcours où les pignons sont désaccouplés de la crémaillère, un dispositif d'indexage angulaire des tournettes, qui inclut une came, chaque tournette étant pourvue d'un suiveur de came solidaire du mandrin, et qui coopère avec la came dans la section inactive du parcours pour y placer le mandrin dans une position angulaire fixe prédéterminée ;
- un manipulateur pourvu d'un outil de démontage du nez de tournette, cet outil étant mobile dans une zone de travail s'étend au moins partiellement à l'aplomb du dispositif d'indexage, de sorte à assurer le démontage du nez de tournette tandis que le mandrin est maintenu dans sa position angulaire fixe.

De la sorte, les mandrins sont momentanément immobilisés en rotation dans une position angulaire prédéterminée, ce qui facilite et accélère les opérations de démontage et de montage des nez de tournettes au moyen d'un robot.

Diverses caractéristiques supplémentaires peuvent être prévues, seules ou combinées. Ainsi, par ex. :
- le suiveur de came se présente sous forme d'un galet ;
- le suiveur de came est solidaire d'un embout portant le pignon ;
- la came comprend une platine pourvue d'une rainure ;
- la rainure est droite ;
- la came comprend une paire de guides ayant des surfaces convergentes en regard, dans le prolongement de la rainure ;
- les guides sont montés articulés sur la platine ;
- les guides sont reliés par un ressort de rappel ;
- la baïonnette est formée par une rainure coudée pratiquée à une extrémité du mandrin, dans laquelle est engagée une goupille portée par le nez de tournette ;
- le nez de tournette est pourvu de méplats pour l'engagement d'un outil complémentaire de démontage du nez de tournette.

Il est proposé, en deuxième lieu, un procédé de démontage, dans une installation tel que présentée ci-dessus, du nez de tournette du mandrin, qui comprend les opérations suivantes :
- Maintien du mandrin dans une position angulaire fixe prédéterminée par coopération du suiveur de came avec la came ;
- Retrait, au moyen de l'outil, du nez de tournette tandis que le mandrin est maintenu dans sa position angulaire fixe.

Le retrait du nez de tournette est avantageusement effectué (par ex. par une rotation suivie d'une translation, imprimées par l'outil solidarisé au nez de tournette

D'autres objets et avantages de l'invention apparaîtront à la lumière de la description d'un mode de réalisation, faite ci-après en référence aux dessins annexés dans lesquels :
- La **FIG.1** est une vue partielle en perspective d'une installation de transport de préformes ;
- La **FIG.2** est une vue partielle en perspective de l'installation de la **FIG.1****,** suivant un autre angle de vue ;
- La **FIG.3** est une vue partielle en perspective d'un détail de l'installation, centré sur le dispositif d'indexage ;
- La **FIG.4** est une vue en perspective montrant quelques maillons de la chaîne avec leurs tournettes, ainsi que le dispositif d'indexage ;
- La **FIG.5** est une vue en perspective montrant les mêmes composants que la **FIG.4****,** suivant un autre angle de vue ;
- La **FIG.6** est une vue de détail à plus grande échelle prise dans le médaillon VI de la **FIG.5** ;
- La **FIG.7** est une vue en coupe selon le plan VII-VII de la **FIG.4** ;
- La **FIG.8** est une vue en perspective montrant une paire de tournettes seules engagées dans la came du dispositif d'indexage, et illustrant le retrait du nez de tournette de l'une d'entre elles ;
- La **FIG.9** est une vue de détail à plus grande échelle, prise dans le médaillon IX de la **FIG.8** et centrée sur les nez de tournettes.

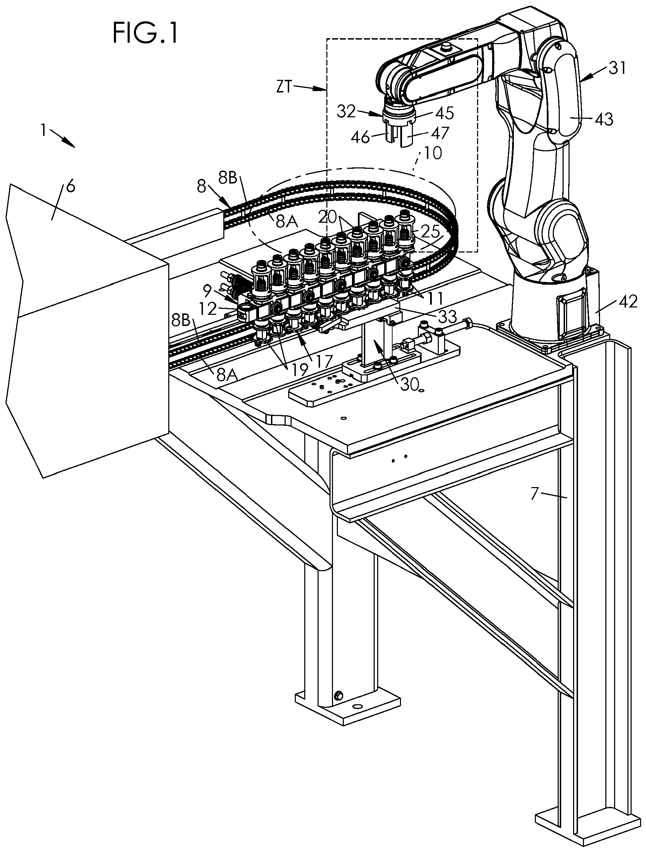

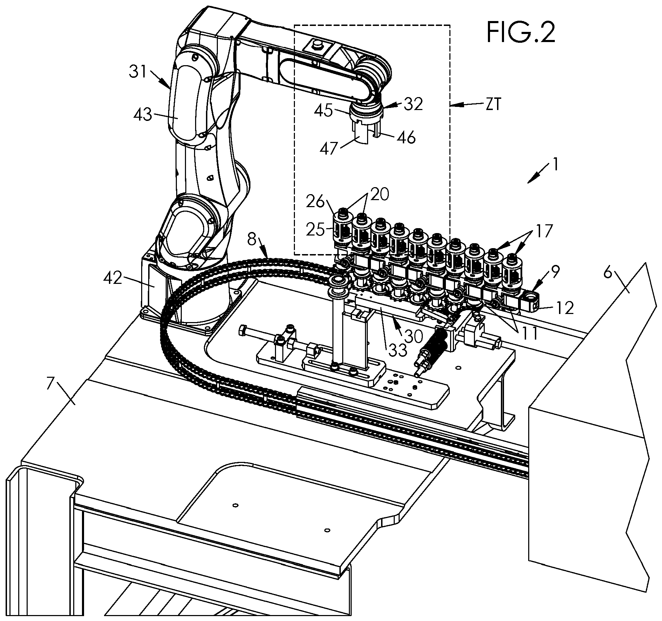

Sur les **FIG.1** et **FIG.2** est représentée une installation **1** de transport de préformes **2,** à partir desquelles doivent être formés (par soufflage ou étirage soufflage) des récipients.

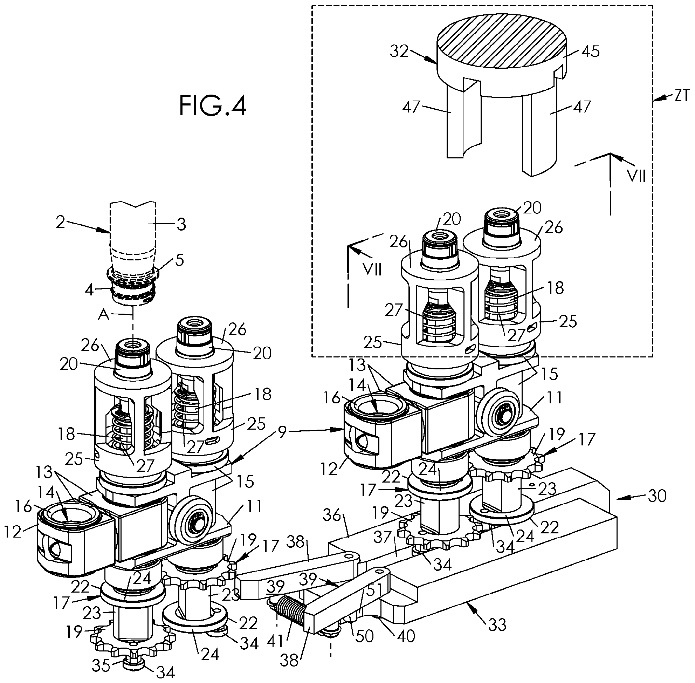

Chaque préforme **2** (on en a représenté une en pointillés sur la **FIG.4****)** comprend un corps **3** cylindrique, un col **4** ouvert qui s'étend à partir d'une première extrémité du corps **3,** et un fond hémisphérique qui s'étend à l'autre extrémité du corps **3.** Dans l'exemple illustré, la préforme **2** comprend une collerette **5** qui sépare le corps **3** du col **4.**

L'installation **1** est ici prévue pour transporter au défilé les préformes **2** dans une unité **6** de conditionnement thermique, appelée four, qui se présente sous forme d'un tunnel, où les préformes **2** doivent être chauffées à une température supérieure à leur température de transition vitreuse, en vue d'être ensuite conformées en récipients au sein d'une unité de formage (non représentée) équipée d'une pluralité de moules à l'empreinte d'un modèle donné de récipient.

L'installation **1** comprend, en premier lieu, un bâti **7** fixe et une crémaillère **8** solidaire du bâti **7.** Dans l'exemple illustré, la crémaillère **8** comprend deux brins **8A, 8B** superposés. Chaque brin **8A, 8B** se présente par ex. sous forme d'une chaîne ou d'une courroie, et s'étend en boucle (non fermée, comme nous le verrons) selon un contour prédéterminé qui, en l'espèce, est de forme ovale.

L'installation **1** comprend, en second lieu, une chaîne **9** de transport déplacée le long d'un parcours. Ce parcours est prédéterminé et épouse au moins localement le contour de la crémaillère **8.** A cet effet, la chaîne **9,** dont une partie seulement est représentée sur les dessins, et notamment sur les **FIG.1** et **FIG.2****,** circule sur des roues **10** dont l'une au moins est motorisée. Sur la **FIG.1****,** on a représenté en trait mixte le contour d'une telle roue **10.**

La chaîne **9** comprend une pluralité de maillons **11** articulés les uns par rapport aux autres. Pour l'articulation de deux maillons **11** successifs, la chaîne **9** comprend un attelage **12** incluant une paire d'osselets **13** mutuellement articulés en rotation et pourvus chacun d'un alésage **14.**

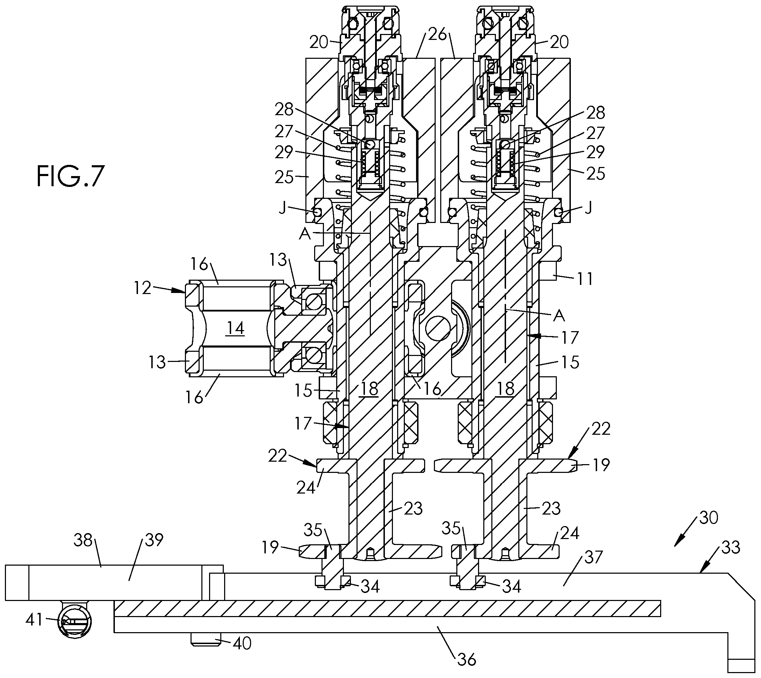

Chaque maillon **11** porte au moins un fourreau **15** qui lui est solidaire (à la fois en translation et en rotation). Comme on le voit sur la **FIG.7****,** le fourreau **15** traverse l'alésage **14** d'un osselet **13,** avec interposition de coussinets **16** formant paliers lisses (éventuellement lubrifiés).

Chaque maillon **11** porte également un support **17** pour une préforme **2.** Ce support **17,** ci-après appelé tournette en raison de son caractère rotatif, est pourvu :
∘ d'un mandrin **18** monté en pivot glissant par rapport au fourreau **15,**
∘ d'un pignon **19** solidaire en rotation du mandrin **18,**
∘ d'un nez **20** de tournette fixé sur le mandrin **18** de manière démontable, par l'intermédiaire d'une baïonnette **21.**

On appelle baïonnette tout système de fixation rapide d'une première pièce sur une deuxième pièce, par emboîtement suivi d'une rotation d'un angle faible (inférieur à 360°, et même inférieur à 180° - le plus souvent même inférieur à 120°).

On note **A** l'axe de rotation du mandrin **18** par rapport au fourreau **15** (et par rapport au maillon **11).**

Comme on le voit sur les **FIG.1** et **FIG.2****,** la crémaillère **8** n'est pas continue mais s'interrompt localement, ce qui définit pour le parcours une section **PA** active (où s'étend la crémaillère **8)** et une section **PI** locale inactive (où la crémaillère **8** est interrompue).

Sur la section **PA** active du parcours, le pignon **19** et la crémaillère **8** sont engrenés. Le déplacement de la chaîne **9** en translation par rapport à la crémaillère **8** entraîne par conséquent le pignon **19** (avec le mandrin **18** qui lui est solidaire ainsi que le nez **20** de tournette fixé sur le mandrin **18)** en rotation autour de l'axe **A.**

Lorsqu'une préforme **2** est montée sur le nez **20** de tournette, la préforme **2** est entraînée dans cette même rotation, de sorte que toute la surface de son corps **3** se trouve exposée au rayonnement du four **6.**

Comme illustré sur les dessins, et plus particulièrement sur la **FIG.7****,** le pignon **19** est formé sur un embout **22** en forme de bobine qui comprend un fût **23** emmanché sur le mandrin **18,** à une extrémité duquel s'étend le pignon **19,** et à l'opposé de celui-ci, un flasque **24** de diamètre inférieur au pignon **19.**

Pour réduire l'entraxe entre les préformes **2,** et ainsi accroître les cadences de production, la chaîne **9** porte deux types de tournettes montés en alternance :
- un premier type (à gauche sur la **FIG.7****)** dans lequel l'embout **22** est monté de sorte que le pignon **19** s'étend à l'extrémité du mandrin **18** pour engrener un premier brin **8A** de la crémaillère **8** ;
- un deuxième type (à droite sur la **FIG.7****)** dans lequel l'embout **22** est monté tête-bêche par rapport à l'embout **22** du premier type, c'est-à-dire dans lequel c'est le flasque **24** qui s'étend à l'extrémité du mandrin **18** et dans lequel le pignon **19** engrène le deuxième brin **8B** de la crémaillère **8.**

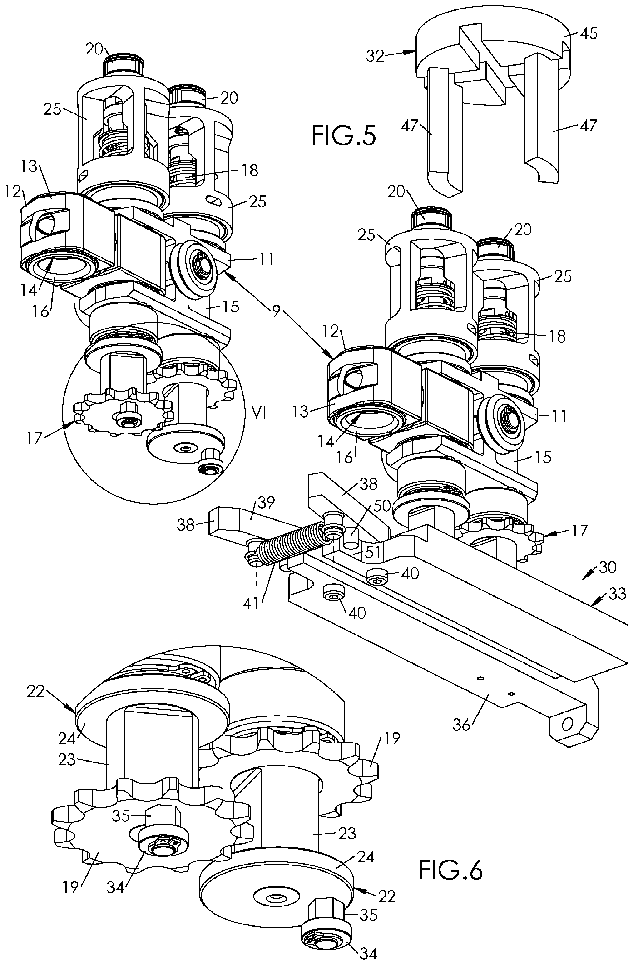

Selon un mode de réalisation illustré sur les **FIG.4** à **FIG.7****,** chaque maillon **11** porte une paire de tournettes **17** adjacentes (une de chaque type).

Chaque maillon **11** porte, pour chaque tournette **17,** un éjecteur **25** fixé sur le fourreau **15.** Cet éjecteur **25** se présente sous forme d'un manchon ajouré entourant une partie du mandrin **18** et du nez **20** de tournette. La fixation de l'éjecteur **25** sur le fourreau **15** est réalisé par emmanchement, avec interposition d'un joint **J** torique. Cependant, il est envisageable de réaliser cette fixation d'une autre manière, par ex. par aimantation, par vissage, par baïonnette, ou analogue.

Chaque tournette **17** est montée en translation par rapport au fourreau **15** (et donc par rapport à l'éjecteur **25),** entre une position déployée, dans laquelle le nez **20** de tournette fait saillie d'une face **26** terminale d'appui de l'éjecteur **25 (****FIG.7****)** pour venir s'emmancher dans le col **4** d'une préforme **2** (opération dite de vêtissage), et une position rétractée dans laquelle le nez **20** de tournette est logé dans l'éjecteur **25** pour en extraire le col **4,** tandis que le col **4** bute contre la face **26** terminale d'appui de l'éjecteur **25** (opération dite de dévêtissage).

Dans une zone non représentée de l'installation **1,** un poussoir vient s'engager dans l'embout **22** pour le déplacer (et avec lui le mandrin **18** et le nez **20** de tournette) en translation par rapport au fourreau **15** (et à l'éjecteur **25),** de sa position déployée à sa position rétractée ou inversement, un ressort **27** de rappel étant intercalé entre le fourreau **15** et le mandrin **18** pour solliciter celui-ci en permanence vers sa position déployée **(****FIG.7****).**

Comme déjà évoqué, la fixation du nez **20** de tournette sur le mandrin **18** est réalisée par l'intermédiaire d'une baïonnette **21.**

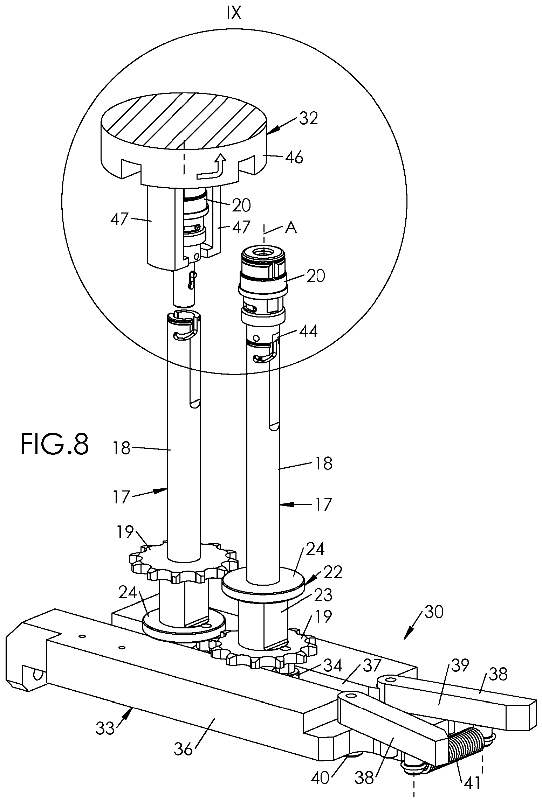

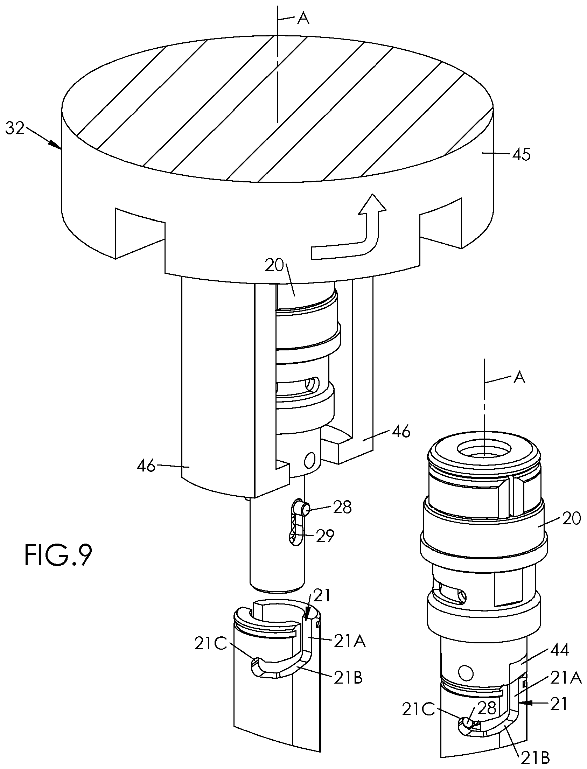

Selon un mode de réalisation illustré sur les **FIG.8** et **FIG.9****,** la baïonnette **21** est formée par une rainure coudée pratiquée à une extrémité du mandrin **18** (opposée au pignon **19).** Plus précisément, cette rainure comprend une section **21A** axiale, parallèle à l'axe **A** de rotation et débouchant sur l'extrémité du mandrin **18,** et une section **21B** transversale (par rapport à l'axe **A),** borgne, qui se termine par une encoche **21C.**

De manière correspondante, le nez **20** de tournette porte une goupille **28** qui vient s'engager dans la baïonnette **21.** Comme illustré sur la **FIG.7****,** la goupille **28** est sollicitée élastiquement par un ressort **29** qui permet le rattrapage du jeu axial entre le nez **20** de tournette et le mandrin **18.** Le nez **20** de tournette se trouve immobilisé à la fois en translation et en rotation par rapport au mandrin **18** lorsque la goupille **28** est positionnée dans l'encoche **21C (****FIG.9****,** à droite).

Pour retirer le nez **20** de tournette du mandrin **18,** il convient d'immobiliser celui-ci en rotation et d'imprimer au nez **20** de tournette un mouvement de rotation (comme indiqué par la flèche courbe en haut, à gauche sur la **FIG.9****),** suivi d'un mouvement de translation (comme indiqué par la flèche droite, également en haut de la **FIG.9****).**

La fixation d'un nez **20** de tournette sur un mandrin s'opère par la séquence inverse.

Selon un mode de réalisation préféré, la baïonnette **21** est double, c'est-à-dire que le mandrin **18** comprend une paire de rainures identiques décalées angulairement de 180°, tandis que, de manière correspondante, le nez **20** de tournette comprend deux goupilles **28** diamétralement opposées qui peuvent être formée par une même tige.

Comme illustré sur la **FIG.1** et sur la **FIG.2****,** l'installation **1** comprend en troisième lieu, au droit de la section **PI** inactive du parcours, un dispositif **30** d'indexage des tournettes **17** dont la fonction est de maintenir temporairement le mandrin **18** dans une orientation angulaire constante prédéterminée pour permettre à un manipulateur **31** automatisé, pourvu d'un outil **32** approprié, d'en retirer le nez **20** de tournette en vue de remplacer celui-ci par un autre, de diamètre différent.

A cet effet, le dispositif **30** d'indexage inclut une came **33,** et chaque tournette **17** est pourvue d'un suiveur **34** de came solidaire du mandrin **18,** et qui coopère avec la came **33** dans la section **PI** inactive du parcours pour placer, dans cette section **PI** inactive, le mandrin **18** (et donc la tournette **17** tant que le nez **20** de tournette y est monté) dans une position angulaire fixe prédéterminée (identique pour toutes les tournettes **17,** modulo 180°).

Le suiveur **34** de came est excentré par rapport à l'axe **A** du mandrin, pour générer, lorsqu'il coopère avec la came **33,** un couple de rotation du mandrin **18.**

Dans l'exemple illustré, le suiveur **34** de came est solidaire de l'embout **22.** Plus précisément, lorsque la tournette **17** est du type dans lequel le pignon **19** s'étend à l'extrémité du mandrin **18** (à gauche sur la **FIG.7****),** le suiveur **34** de came est porté par le pignon **19** ; lorsque la tournette **17** est du type dans lequel c'est le flasque **24** qui s'étend à l'extrémité du mandrin **18** (à droite sur la **FIG.7****),** le suiveur **34** de came est porté par le flasque **24.**

Selon un mode de réalisation illustré sur les dessins, et plus particulièrement sur les **FIG.4** à **FIG.7****,** le suiveur **34** de came se présente sous forme d'un galet. Ce galet **34** est par ex. monté sur un goujon **35** vissé sur l'embout **22.**

Selon un mode de réalisation illustré sur les dessins, et plus particulièrement sur les **FIG.4** et **FIG.8****,** la came **33** comprend une platine **36** (qui peut être en métal ou en plastique, par ex. en polyoxyméthylène ou POM) pourvue d'une rainure **37.** Dans l'exemple illustré, où la section **PI** inactive du parcours est située dans une portion rectiligne de celui-ci, la rainure **37** est droite.

Pour amener progressivement les mandrins **18** dans la position angulaire souhaitée, et ainsi limiter les chocs, la came **33** comprend une paire de guides **38** ayant des surfaces **39** convergentes en regard, dans le prolongement de la rainure **37** (et en amont de celle-ci dans le sens de déplacement de la chaîne **9).**

Chaque guide **38** se présente par ex. sous forme d'une barrette à section rectangulaire ou carrée, réalisée dans le même matériau que la platine (par ex. en POM). Les guides **38** sont avantageusement montés articulés sur la platine **36,** au moyen de pivots **40** (par ex. sous forme de goujons).

Selon un mode préféré de réalisation, chaque guide **38** est chanfreiné à une extrémité libre. Par ailleurs, comme illustré sur les **FIG.4****,** **FIG.5** et **FIG.8****,** les guides **38** sont avantageusement reliés par un ressort **41** de rappel (fonctionnant en traction dans l'exemple illustré) qui tend à les rappeler l'un vers l'autre lorsqu'ils sont écartés, par ex. lorsqu'un galet 34 appuie sur l'un deux à l'accostage d'une tournette 17. Ce ressort **41** joue un rôle d'amortisseur qui absorbe une partie des chocs des galets **34** contre les guides **38.**

Pour retirer le nez **20** de tournette tandis que celle-ci est située dans la section **PI** inactive du parcours, l'installation **1** est équipée, en quatrième lieu, d'un manipulateur **31** automatisé, situé au voisinage de la section **PI** inactive du parcours.

Le manipulateur **31** est articulé au moins en translation verticale et en rotation autour d'un axe vertical. Cependant, selon un mode de réalisation illustré sur les dessins, le manipulateur **31** est un robot multiaxe.

Le manipulateur **31** est pourvu d'un socle **42** fixe (par ex. monté sur le bâti **7,** comme illustré sur les **FIG.1** et **FIG.2****),** et d'un squelette **43** articulé.

Le squelette **43** est pourvu, à une extrémité, d'un outil **32** conçu pour assurer le démontage du nez **20** de tournette par rotation et translation en le désaccouplant de la baïonnette **21.**

A cet effet, l'outil **32** est mobile dans une zone **ZT** de travail qui s'étend au moins partiellement à l'aplomb du dispositif **30** d'indexage. Sur les **FIG.1****,** **FIG.2** et **FIG.4****,** la zone **ZT** de travail est schématisée sous forme d'un rectangle en pointillés. On comprendra que cette forme ne délimite pas les contours exacts de la zone **ZT** de travail (qui dépend, en pratique, des degrés de liberté de l'outil **32),** mais vise simplement à la matérialiser en rapport avec l'environnement plus général de l'installation **1.**

Dans l'exemple illustré, le nez **20** de tournette est pourvu de méplats **44** (de forme et dimension constante pour l'ensemble des modèles de nez **20** de tournettes). Quant à l'outil **32,** il comprend avantageusement un mandrin **45** rotatif portant une paire de pinces **46** primaires montées coulissantes entre une position écartée permettant à l'outil **32** de venir coiffer le nez **20** de tournette, et une position rapprochée dans laquelle les pinces **46** viennent enserrer les méplats **44** pour solidariser l'outil en rotation avec le nez **20** de tournette **(****FIG.9****).**

Le manipulateur **31** est, de préférence, également conçu (et programmé) pour assurer le retrait préalable de l'éjecteur **25.** A cet effet, dans l'exemple illustré, l'outil **32** est pourvu d'une paire de pinces **47** secondaires (à profil en gouttière) montées coulissantes sur le mandrin **45** entre une position écartée permettant à l'outil **32** de venir coiffer l'éjecteur **25,** et une position rapprochée dans laquelle les pinces **47** viennent enserrer l'éjecteur **25,** dont le retrait est assuré par traction axiale, le joint **J** se comprimant radialement sous l'effet de cette traction jusqu'à libérer l'éjecteur **25** du fourreau **15.**

Selon un mode particulier de réalisation, l'éjecteur **25** peut, lors de son retrait, venir se solidariser en rotation au nez **20** de tournette pour servir d'outil permettant le démontage de celui-ci.

Le fonctionnement est le suivant.

Tant que les tournettes **17** sont accouplées, via leur pignon **19,** à la crémaillère **8** dans la section **PA** active du parcours, elles sont entraînées en rotation par la translation de la chaîne **9** de transport.

Dès lors qu'une tournette **17** parvient dans la section **PI** inactive du parcours, son pignon **19** se désaccouple de la crémaillère **8,** de sorte que la tournette **17** est momentanément libre en rotation. Cependant le suiveur **34** de came, dont l'orientation est quelconque à l'instant où le pignon **19** échappe à la crémaillère **8,** vient s'engager dans la came **33** qui exerce sur lui un effort de réaction générateur d'un couple de rotation du mandrin **18** au tour de son axe **A.**

Une fois le suiveur **34** de came engagé dans la rainure **37,** et tant qu'il n'en est pas sorti, l'orientation angulaire du mandrin **18** est fixe. C'est alors que l'outil **32** du manipulateur **31** vient, dans un premier temps, et au moyen des pinces **47** secondaires, saisir l'éjecteur 25 pour le retirer du fourreau **15** par traction axiale.

L'éjecteur **25** est remisé par le manipulateur **31** dans un magasin (jouxtant de préférence l'installation **1**).

Puis l'outil **32** du manipulateur vient, dans un second temps, et au moyen des pinces **46** primaires, saisir le nez **20** de tournette pour lui imprimer un mouvement de rotation (partie courbe de la flèche sur la **FIG.9****)** suivi d'un mouvement de translation (partie droite de la flèche sur la **FIG.9****),** ce qui désengage la goupille **28** de la baïonnette **21** et désolidarise ainsi le nez **20** de tournette du mandrin **18,** lequel est maintenu fixe en rotation pendant ces opérations.

Comme le mandrin **18** est maintenu fixe, l'angle de rotation que doit imprimer l'outil **32** du robot **31** au nez **20** de tournette est constant d'une tournette **17** à l'autre (et faible), au bénéfice de la rapidité du démontage du nez **20** de tournette.

Après que le nez **20** de tournette a été retiré, il est remisé par le manipulateur **31** dans le magasin.

Un nouveau nez **20** de tournette est alors prélevé du magasin par le manipulateur **31,** et monté par celui-ci sur le mandrin **18** (préalablement dénudé) par une séquence de montage inverse de la séquence de démontage décrite ci-dessus.

Comme la position angulaire du mandrin **18** n'a pas varié (il se trouve encore dans la section **PI** inactive du parcours, le suiveur **34** de came coopérant toujours avec la came **33),** la localisation de la baïonnette **21** est connue, et le manipulateur **31** peut y engager directement la goupille **28** du nouveau nez **20** de tournette sans devoir tâtonner, au bénéfice, une nouvelle fois, de la rapidité de montage.

Enfin, le manipulateur **31** prélève dans le magasin un éjecteur **25** qu'il monte sur le fourreau **15** par une séquence de montage inverse de la séquence de démontage de l'éjecteur **25** précédent, décrite ci-dessus.

Dans une variante d'exécution, dans laquelle, comme évoqué ci-dessus, l'éjecteur **25** peut, lors de son retrait, être solidarisé en rotation au nez **20** de tournette, le remplacement de l'éjecteur **25** et du nez **20** de tournette est simultané. Dans ce cas, l'outil **32** du manipulateur **31** vient saisir l'éjecteur **25** pour le retirer du fourreau **15** jusqu'à venir l'engager sur le nez **20** de tournette puis, à l'aide de l'éjecteur **25** servant d'outil, imprimer au nez **20** de tournette les mouvements nécessaires à son retrait (rotation, translation). Le couple éjecteur **25**-nez de tournette **20** est alors remisé par le manipulateur **31** dans le magasin puis remplacé par un autre couple éjecteur **25**-nez **20** de tournette prélevé dans le magasin.

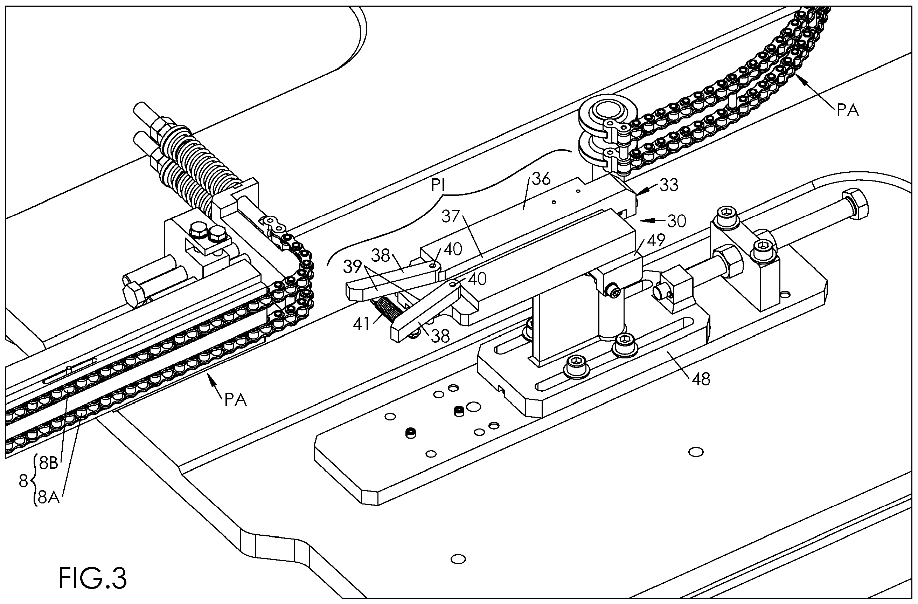

Il est envisageable, pour améliorer la précision de l'indexage angulaire des tournettes **17,** de prévoir un réglage de la position de la came **33.** Ainsi, dans l'exemple illustré sur la **FIG.3****,** le dispositif **30** d'indexage est pourvu d'un système de réglage de la came **33,** qui comprend par ex. une coulisse **48** longitudinale (dans le sens de déplacement des tournettes **17)** et une coulisse **49** transversale (perpendiculairement au sens de déplacement des tournettes **17).**

Par ailleurs, les guides **38** peuvent être maintenus dans un écartement angulaire minimum au moyen de pions **50** qui viennent s'appliquer, sur sollicitation du ressort **41,** contre des butées **51** formées sur la platine **36.**

## Revendications

1. Installation **(1)** de transport de préformes **(2)** de récipients, chaque préforme **(2)** ayant un corps **(3)** cylindrique et un col **(4)** ouvert, cette installation **(1)** comprenant :
- Une crémaillère **(8)** ;
- Une chaîne **(9)** de transport déplacée le long d'un parcours, et comprenant une pluralité de maillons **(11)** articulés les uns par rapport aux autres, chaque maillon (**11**) portant au moins un fourreau **(15)** qui lui est solidaire, et une tournette **(17)** pourvue :
∘ d'un mandrin **(18)** monté en pivot glissant par rapport au fourreau **(15),**
∘ d'un pignon **(19)** solidaire en rotation du mandrin **(18)** et engrenant la crémaillère **(8)** sur une section active du parcours,
∘ d'un nez **(20)** de tournette fixé sur le mandrin **(18)** de manière démontable par l'intermédiaire d'une baïonnette **(21)** ;
- un manipulateur **(31)** pourvu d'un outil **(32)** de démontage du nez **(20)** de tournette ;
cette installation **(1)** étant **caractérisée :**
- **en ce qu'**elle comprend, au droit d'une section **(PI)** locale inactive du parcours où les pignons **(19)** sont désaccouplés de la crémaillère **(8),** un dispositif **(30)** d'indexage angulaire des tournettes **(17),** qui inclut une came **(33)** ;
- **en ce que** chaque tournette **(17)** est pourvue d'un suiveur **(34)** de came solidaire du mandrin **(18),** et qui coopère avec la came **(33)** dans la section **(PI)** inactive du parcours pour y placer le mandrin **(18)** dans une position angulaire fixe prédéterminée ;
- **en ce que** l'outil **(32)** est mobile dans une zone **(ZT)** de travail s'étend au moins partiellement à l'aplomb du dispositif **(30)** d'indexage, de sorte à assurer le démontage du nez **(20)** de tournette tandis que le mandrin **(18)** est maintenu dans sa position angulaire fixe.

2. Installation **(1)** selon la revendication 1, **caractérisée en ce que** le suiveur **(34)** de came se présente sous forme d'un galet.

3. Installation **(1)** selon la revendication 1 ou la revendication 2, **caractérisée en ce que** le suiveur **(34)** de came est solidaire d'un embout **(22)** portant le pignon **(19).**

4. Installation **(1)** selon l'une des revendications précédentes, **caractérisée en ce que** la came **(33)** comprend une platine **(36)** pourvue d'une rainure **(37).**

5. Installation **(1)** selon la revendication 4, **caractérisée en ce que** la rainure **(37)** est droite.

6. Installation **(1)** selon la revendication 4 ou la revendication 5, **caractérisée en ce que** la came **(33)** comprend une paire de guides **(38)** ayant des surfaces **(39)** convergentes en regard, dans le prolongement de la rainure **(37).**

7. Installation **(1)** selon la revendication 6, **caractérisée en ce que** les guides **(38)** sont montés articulés sur la platine **(36).**

8. Installation selon la revendication 7, **caractérisée en ce que** les guides **(38)** sont reliés par un ressort **(29)** de rappel.

9. Installation **(1)** selon l'une des revendications précédentes, **caractérisée en ce que** la baïonnette **(21)** est formée par une rainure coudée pratiquée à une extrémité du mandrin **(18),** dans laquelle est engagée une goupille **(28)** portée par le nez **(20)** de tournette.

10. Installation **(1)** selon l'une des revendications précédentes, **caractérisée en ce que** le nez **(20)** de tournette est pourvu de méplats **(44)** pour l'engagement d'un outil **(32)** complémentaire de démontage du nez **(20)** de tournette.

11. Procédé de démontage, dans une installation **(1)** selon l'une des revendications précédentes, du nez **(20)** de tournette du mandrin (18), qui comprend les opérations suivantes :
- Maintien du mandrin **(18)** dans une position angulaire fixe prédéterminée par coopération du suiveur **(34)** de came avec la came **(33)** ;
- Retrait, au moyen de l'outil **(32),** du nez **(20)** de tournette tandis que le mandrin **(18)** est maintenu dans sa position angulaire fixe.

12. Procédé selon la revendication 11, **caractérisé en ce que** le retrait du nez **(20)** de tournette est effectué par une rotation suivie d'une translation, imprimées par l'outil **(32)** solidarisé au nez **(20)** de tournette.

## Patentansprüche

1. Anlage (1) zum Transport von Behältervorformlingen (2), wobei jeder Vorformling (2) einen zylindrischen Körper (3) und einen offenen Hals (4) aufweist, wobei die Anlage (1) Folgendes umfasst:
- eine Zahnschiene (8);
- eine Transportkette (9), die entlang einer Bahn bewegt wird und mehrere aneinander angelenkte Glieder (11) umfasst, wobei jedes Glied (11) zumindest eine fest mit diesem verbundene Hülse (15) und eine Spindel (17) trägt, die versehen ist mit:
o einem Futter (18), das relativ zur Hülse (15) drehbar montiert ist,
o einem Ritzel (19), das drehfest mit dem Futter (18) verbunden ist und mit der Zahnstange (8) auf einem aktiven Abschnitt der Bahn kämmt,
o einer Spindelnase (20), die mittels eines Bajonetts (21) abnehmbar am Futter (18) befestigt ist;
- einen Manipulator (31), der mit einem Werkzeug (32) zur Demontage der Spindelnase (20) versehen ist;
wobei die Anlage (1) **dadurch gekennzeichnet ist:**
- **dass** sie im Bereich eines lokal inaktiven Abschnitts (PI) der Bahn, wo die Ritzel (19) von der Zahnschiene (8) abgekoppelt sind, eine Vorrichtung (30) zur Winkelindexierung der Spindeln (17) umfasst, die einen Nocken (33) beinhaltet;
- **dass** jede Spindel (17) mit einem Nockenstößel (34) versehen ist, der fest mit dem Futter (18) verbunden ist und der mit dem Nocken (33) im inaktiven Abschnitt (PI) der Bahn zusammenwirkt, um das Futter (18) in eine vorbestimmte feste Winkelposition zu bringen;
- **dass** das Werkzeug (32) in einem Arbeitsbereich (ZT) beweglich ist, der sich zumindest teilweise lotrecht zur Indexierungsvorrichtung (30) erstreckt, um die Demontage der Spindelnase (20) zu gewährleisten, während das Futter (18) in seiner festen Winkelposition gehalten wird.

2. Anlage (1) nach Anspruch 1, **dadurch gekennzeichnet, dass** der Nockenstößel (34) die Form einer Rolle aufweist.

3. Anlage (1) nach Anspruch 1 oder Anspruch 2, **dadurch gekennzeichnet, dass** der Nockenstößel (34) fest mit einem das Ritzel (19) tragenden Endstück (22) verbunden ist.

4. Anlage (1) nach einem der vorangehenden Ansprüche, **dadurch gekennzeichnet, dass** der Nocken (33) eine mit einer Nut (37) versehene Platte (36) aufweist.

5. Anlage (1) nach Anspruch 4, **dadurch gekennzeichnet, dass** die Nut (37) gerade ist.

6. Anlage (1) nach Anspruch 4 oder Anspruch 5, **dadurch gekennzeichnet, dass** der Nocken (33) in der Verlängerung der Nut (37) ein Paar Führungen (38) mit einander gegenüberliegenden konvergierenden Flächen (39) umfasst.

7. Anlage (1) nach Anspruch 6, **dadurch gekennzeichnet, dass** die Führungen (38) an der Platte (36) angelenkt sind.

8. Anlage nach Anspruch 7, **dadurch gekennzeichnet, dass** die Führungen (38) durch eine Rückstellfeder (29) verbunden sind.

9. Anlage (1) nach einem der vorangehenden Ansprüche, **dadurch gekennzeichnet, dass** das Bajonett (21) durch eine an einem Ende des Futters (18) vorgesehene gekrümmte Nut ausgebildet ist, in die ein von der Spindelnase (20) getragener Stift (28) eingreift.

10. Anlage (1) nach einem der vorangehenden Ansprüche, **dadurch gekennzeichnet, dass** die Spindelnase (20) mit Abflachungen (44) für den Eingriff eines komplementären Werkzeugs (32) zur Demontage der Spindelnase (20) versehen ist.

11. Verfahren zur Demontage der Spindelnase (20) aus dem Futter (18) in einer Anlage (1) nach einem der vorangehenden Ansprüche, das die folgenden Arbeitsschritte umfasst:
- Halten des Futters (18) in einer vorbestimmten Winkelposition durch Zusammenwirken des Nockenstößels (34) mit dem Nocken (33);
- Entnehmen der Spindelnase (20) mit Hilfe des Werkzeugs (32), während das Futter (18) in seiner festen Winkelposition gehalten wird.

12. Verfahren nach Anspruch 11, **dadurch gekennzeichnet, dass** die Entnahme der Spindelnase (20) durch Drehen und anschließendes Verschieben anhand des fest mit der Spindelnase (20) verbundenen Werkzeugs (32) erfolgt.

## Claims

1. Installation **(1)** for transporting container preforms **(2),** each preform **(2)** having a cylindrical body **(3)** and an open neck **(4),** this installation **(1)** comprising:
- a rack **(8);**
- a transport chain **(9)** that is moved along a path and comprises a plurality of links **(11)** that are articulated with respect to one another, each link **(11)** bearing at least one sheath **(15)** that is secured thereto, and a spinner **(17)** provided:
∘ with a spindle **(18)** mounted so as to slide and pivot with respect to the sheath **(15),**
∘ with a pinion **(19)** that rotates as one with the spindle **(18)** and meshes with the rack **(8)** over an active section of the path,
∘ with a spinner tip **(20)** removably fastened to the spindle **(18)** by way of a bayonet mount **(21)** ;
- a manipulator **(31)** provided with a tool **(32)** for removing the spinner tip **(20);**
this installation **(1)** being **characterized:**
- **in that** it comprises, in line with a local inactive section **(PI)** of the path in which the pinions **(19)** are decoupled from the rack **(8),** a device **(30)** for angular indexing of the spinners **(17),** which includes a cam **(33);**
- **in that** each spinner **(17)** is provided with a cam follower **(34)** that is secured to the spindle **(18)** and cooperates with the cam **(33)** in the inactive section **(PI)** of the path so as to place the spindle **(18)** there in a predetermined fixed angular position;
- **in that** the tool **(32)** is able to move in a working zone **(ZT)** that extends at least partially vertically in line with the indexing device **(30),** so as to carry out the removal of the spinner tip **(20)** while the spindle **(18)** is maintained in its fixed angular position.

2. Installation **(1)** according to Claim 1, **characterized in that** the cam follower **(34)** is in the form of a roller.

3. Installation **(1)** according to Claim 1 or Claim 2, **characterized in that** the cam follower **(34)** is secured to an end piece **(22)** bearing the pinion **(19).**

4. Installation **(1)** according to one of the preceding claims, **characterized in that** the cam **(33)** comprises a plate **(36)** provided with a groove **(37).**

5. Installation **(1)** according to Claim 4, **characterized in that** the groove **(37)** is straight.

6. Installation **(1)** according to Claim 4 or Claim 5, **characterized in that** the cam **(33)** comprises a pair of guides **(38)** having facing convergent surfaces **(39)** in the extension of the groove **(37).**

7. Installation **(1)** according to Claim 6, **characterized in that** the guides **(38)** are mounted in an articulated manner on the plate **(36).**

8. Installation according to Claim 7, **characterized in that** the guides **(38)** are connected by a return spring **(29)** .

9. Installation **(1)** according to one of the preceding claims, **characterized in that** the bayonet mount **(21)** is formed by a bent groove created at one end of the spindle **(18),** in which a pin **(28)** borne by the spinner tip **(20)** is engaged.

10. Installation **(1)** according to one of the preceding claims, **characterized in that** the spinner tip **(20)** is provided with flats **(44)** for the engagement of a complementary tool **(32)** for removing the spinner tip **(20)** .

11. Method of removing, in an installation **(1)** according to one of the preceding claims, the spinner tip **(20)** from the spindle **(18),** which comprises the following operations:
- maintaining the spindle **(18)** in a predetermined fixed angular position by cooperation of the cam follower **(34)** with the cam **(33);**
- withdrawing, by means of the tool **(32),** the spinner tip **(20)** while the spindle **(18)** is maintained in its fixed angular position.

12. Method according to Claim 11, **characterized in that** the withdrawal of the spinner tip **(20)** is effected by a rotation followed by a translational movement, which are imparted by the tool **(32)** secured to the spinner tip **(20)** .
